# FASCICULE DE BREVET EUROPEEN

(11) **EP 0 381 556 B1**
(45) Date de publication et mention de la délivrance du brevet: **16.03.1994**
(21) Numéro de dépôt: 90400208.6
(22) Date de dépôt: 24.01.1990
(51) Int. Cl.: F16J 1/16, B21K 1/06

(54) **Procédé de fabrication d'un axe creux à renflements internes de révolution; axe obtenu par ce procédé**
Hohlbolzen mit inneren Ausbuchtungen und deren Herstellung
Tubular pin with internal bulges, and process for making the same

(30) Priorité: 27.01.1989 FR 8901036
(43) Date de publication de la demande: 08.08.1990
(73) Titulaire: FLOQUET MONOPOLE, F-78301 Poissy (FR)
(72) Inventeur: Fefeu, Michel Alain, F-78470 Magny-les-Hameaux (FR); Perrin, Gérard Louis, F-90700 Chatenois les Forges (FR)
(74) Mandataire: Picard, Jean-Claude Georges

(56) Documents cités:
- EP-A- 0 213 294
- FR-A- 2 293 262
- US-A- 4 677 722

## Description

La présente invention concerne tout d'abord un procédé de fabrication d'un axe creux à renflements internes de révolution, consistant à élaborer tout d'abord des tronçons d'axe creux comportant chacun au moins un renflement interne de révolution à profil pratiquement sinusoïdal , puis à assembler deux tronçons bout à bout, coaxialement, pour obtenir un axe creux comportant intérieurement au moins deux renflements de révolution.

Un tel procédé est connu par le document US-A-4 677 722. De tels axes creux à renflements internes sont utiles notamment pour assurer la liaison entre un pied de bielle et un piston de moteur à combustion interne, ces axes étant soumis à d'importants efforts de flexion et d'ovalisation qui, du fait de leur montage entre les deux paliers du piston, ne sont pas uniformément répartis. Les renflements internes, bien entendu localisés aux emplacements de l'axe qui sont soumis aux efforts de flexion et d'ovalisation les plus importants, à savoir au niveau des plans qui, après montage de l'axe, seront situés entre chaque palier du piston et la bielle, évitent d'avoir à conférer à ces axes une épaisseur de paroi relativement importante, surdimensionnée, dans les zones de l'axe qui sont soumises aux efforts les plus faibles, à savoir essentiellement les extrémités de l'axe, qui sont engagées dans les paliers du piston, et la zone centrale de l'axe, qui est engagée dans l'alésage du pied de bielle.

Selon le document précité, le procédé de fabrication des tronçons d'axe nécessite l'utilisation de deux poinçons agissant contre une ébauche dans deux sens opposés, avec à chaque fois la nécessité de sortir de la matrice l'ébauche ainsi creusée, ce qui représente une opération longue et délicate. Ensuite il convient de perforer le voile central avec un outil tel qu'une fraise, ce qui représente une opération supplémentaire et permet de dire qu'il s'agit là d'un procédé essentiellement discontinu, à productivité réduite.

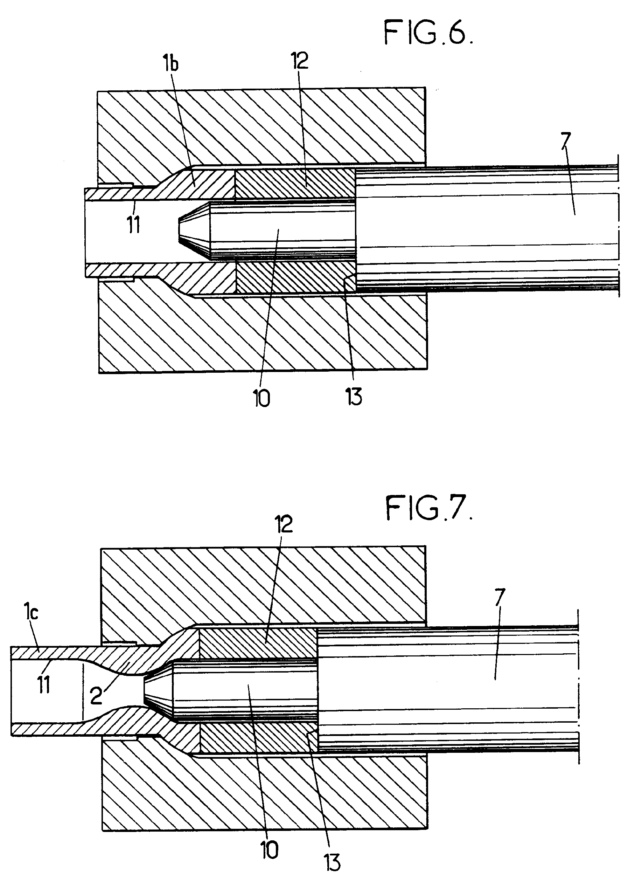

Il convient de noter en outre que le procédé du brevet américain cité ne permet pas en réalité d'obtenir la pièce telle qu'elle a été représentée à la figure 7 du brevet. Si l'on observe en effet la figure 5, on constate que les parties les plus épaisses présentent un profil plat dû à l'usinage par l'outil et non pas le profil arrondi représenté sur la figure 7.

Le document FR-A-2 293 262 décrit un procédé d'extrusion dans une presse, pour constituer par exemple des essieux, mais le poinçon utilisé est tel qu'il ne peut permettre d'obtenir un profil sinusoïdal pour les renflements internes de révolution de l'axe creux.

Le but de la présente invention est de remédier à ces inconvénients de la technique antérieure et, à cet effet, un procédé de fabrication d'un axe creux à renflements internes de révolution conforme à l'invention, du type général défini au début, est essentiellement caractérisé en ce que lesdits tronçons sont réalisés par des opérations d'extrusion à froid à l'aide d'un seul poinçon, sans reprise de la pièce et sans usinage intérieur subséquent, ces opérations d'extrusion comprenant :
- l'extrusion, sur une partie de sa longueur, d'une ébauche tubulaire par l'orifice rétréci d'une matrice. la pointe d'un poinçon à épaulement unique s'engageant dans un passage axial de ladite ébauche tandis que celle-ci est poussée par ledit épaulement ;
- la poussée de l'ébauche ainsi déformée par une pièce intercalaire interposée entre ledit épaulement et l'ébauche, la pointe du poinçon étant ainsi partiellement extraite du passage de ladite ébauche ;
- ce qui produit un renflement interne à profil pratiquement sinusoïdal dans la partie de l'ébauche située en avant de ladite pointe du poinçon, tandis que cette ébauche est complètement extraite de la matrice.

Avantageusement, la pointe du poinçon est terminée par une extrémité conique.

Un tel procédé est pratiquement continu, comme ceci apparaîtra mieux dans la suite, ne nécessitant pas, en particulier, une reprise de l'ébauche une fois qu'elle a été engagée dans la matrice, que ce soit pour l'usiner ou pour toute autre raison.

Un procédé conforme à l'invention pourra encore être caractérisé en ce que ladite pièce intercalaire est constituée par l'ébauche suivante, mesure qui contribue à rendre le procédé quasi-continu, et permet d'obtenir une grande productivité ; il est à noter que l'ébauche entre par une extrémité de la matrice et y est poussée toujours dans le même sens, pour sortir par son autre extrémité, ce qui évite toute perte de temps.

L'invention porte également sur un axe creux destiné en particulier à assurer la liaison entre un pied de bielle et un piston de moteur à combustion interne, cet axe étant profilé intérieurement de sorte à présenter au moins deux renflements de révolution, à profil pratiquement sinusoïdal, au niveau de la ou des zones susceptibles d'être soumises aux efforts les plus importants, à savoir au niveau de ses plans de cisaillement respectifs, cet axe étant caractérisé en ce qu'il est fabriqué selon le procédé qui vient d'être défini.

Cet axe pourra en particulier se caractériser par le fait que le renflement de révolution interne de chaque tronçon, à profil pratiquement sinusoïdal, est à peu près central dans chaque tronçon, ceci étant obtenu directement à la sortie de la matrice d'extrusion à froid, sans aucun usinage subséquent.

Des modes d'exécution de l'invention vont maintenant être décrits avec référence aux figures du dessin annexé dans lequel :
- la **figure 1** représente en coupe axiale un tronçon d'axe conforme à l'invention, à renflement interne central ;
- la **figure 2** est une vue en coupe axiale de deux tronçons d'axe analogues à ceux de la figure 1 (mais plus courts) aboutés et reliés par une opération de soudage par frottement, ces deux tronçons constituant ainsi une ébauche d'axe ;
- la **figure 3** est une vue en coupe axiale de l'axe fini obtenu par usinage externe de l'ébauche de la figure 2 ; et
- les **figures 4 à 7** sont des vues schématiques en coupe axiale de la matrice et du poinçon d'extrusion à froid des tronçons d'axe, montrant les différentes étapes de l'extrusion.

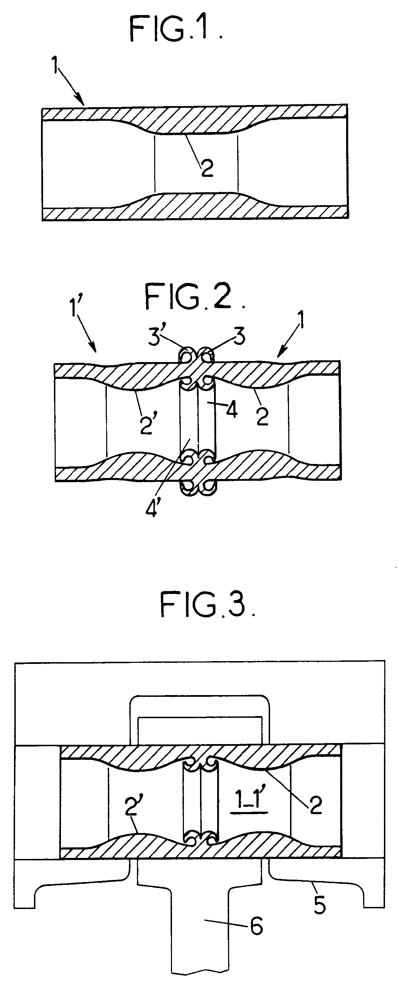

Le tronçon d'axe 1 de la figure 1, par exemple en acier cémenté, comporte intérieurement un renflement de révolution 2. On voit qu'il s'étend centralement, sur à peu près le 1/3 de la longueur du tronçon ; bien entendu, son étendue en longueur pourrait être moindre.

Lorsqu'il est souhaitable d'obtenir des axes creux à deux renflements internes, séparés par une zone centrale d'épaisseur plus réduite (d'épaisseur sensiblement égale à celle des extrémités), comme c'est le cas en particulier pour les axes de liaison bielle-piston, on peut fabriquer d'abord deux tronçon 1 analogues à celui de la figure 1, et les souder bout à bout. C'est ce qui a été représenté à la figure 2, où les tronçons ont été référencés 1 et 1', et leurs renflements internes respectifs 2 et 2'. Les bourrelets externes 3, 3' et internes 4, 4' sont consécutifs au mode de soudage par inertie (ou par frottement) : les deux tronçons sont alignés, l'un est entraîné en rotation et l'autre, fixe, est pressé contre lui pour la mise en contact des deux surfaces ; l'échauffement par frottement qui en résulte provoque leur soudage, moment auquel, bien entendu, leur entraînement positif est stoppé.

La figure 3 montre l'axe fini, obtenu par usinage externe de l'ébauche de la figure 2. Sur cette figure, on a représenté en trait spectral les paliers 5 du piston de moteur à combustion interne, que cet axe 1-1' est supposé relier au pied 6 d'une bielle.

On comprend qu'un tel axe présente des extrémités et une partie centrale amincies, par rapport aux axes connus de dimensions extérieures équivalentes et soumis aux mêmes efforts, et que l'épaisseur normale ne se retrouve qu'au niveau des renflements 2 et 2' ; le gain de poids est donc appréciable.

Les figures suivantes montrent le procédé de fabrication, par extrusion à froid, des tronçons tels que 1 et 1'.

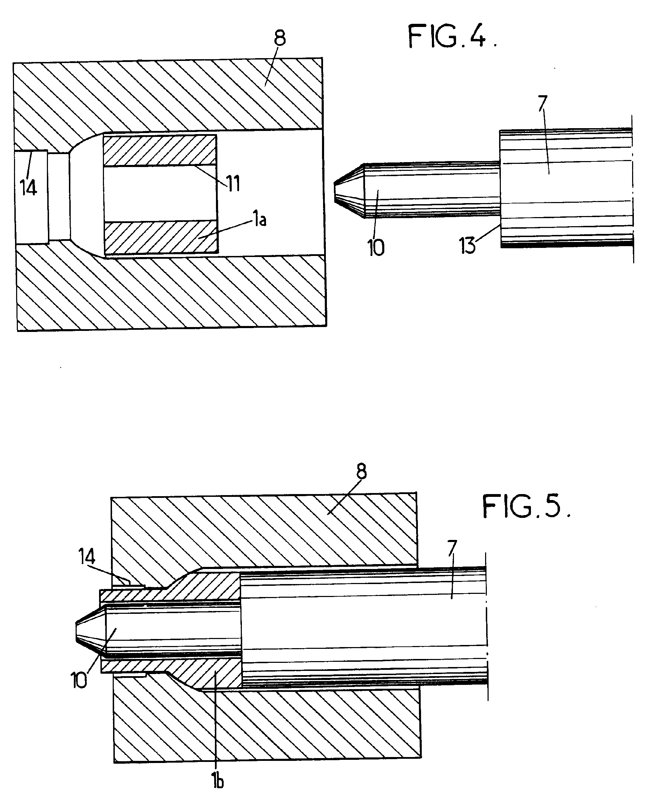

Sur les figures 4 à 7, le poinçon (ou aiguille de filage) a été référencé 7, et la matrice 8.

La figure 4 montre une ébauche tubulaire la placée dans la matrice, et la figure 5 sa déformation 1b, après engagement de la pointe 10 du poinçon dans son passage axial 11. On voit que l'extrémité arrière de l'ébauche est pressée par l'épaulement 13 du poinçon, et que son extrémité avant est extrudée, étant comprimée entre la pointe 10 du poinçon et l'orifice rétréci 14 de la matrice.

Le poinçon 7 est ensuite extrait, et une nouvelle ébauche 12 est introduite dans la matrice 8, derrière l'ébauche 1b.

La pression étant remise sur le poinçon 7, et sa pointe 10 étant ainsi partiellement dégagée du passage 11 de la première ébauche, on conçoit que la poussée de l'ébauche suivante 12 va faire naître le renflement 2 juste en avant de la pointe 10. On obtient alors le tronçon de la figure 1, après avoir continué la poussée pour le faire complètement sortir de la matrice. La nouvelle ébauche 12 se trouve alors dans la position qu'occupait l'ébauche 1a à la figure 4, et le cycle se répète de la même manière.

Il est à noter qu'au lieu de l'ébauche suivante 12 on pourrait utiliser une pièce d'outillage intercalaire indéformable, mais que l'intérêt d'utiliser l'ébauche suivante pour pousser l'ébauche précédente est évidemment de parvenir à un gain de temps appréciable.

On voit aussi, en observant les figures 2 et 3, que le profil des renflements 2, 2' est pratiquement sinusoïdal, et ceci de façon naturelle, du fait de la seule opération d'extrusion à froid, sans aucun usinage subséquent. Ceci constitue un résultat supplémentaire intéressant de l'invention, car cette forme quasi sinusoïdale des renflements est pratiquement idéale du point de vue de la résistance mécanique de l'axe, comme le montre la théorie.

## Revendications

1. Procédé de fabrication d'un axe creux à renflements internes de révolution, consistant à élaborer tout d'abord des tronçons d'axe creux comportant chacun au moins un renflement interne de révolution à profil pratiquement sinusoïdal, puis à assembler deux tronçons bout à bout, coaxialement, pour obtenir un axe creux comportant intérieurement au moins deux renflements de révolution, caractérisé en ce que lesdits tronçons sont réalisés par des opérations d'extrusion à froid à l'aide d'un seul poinçon (7), sans reprise de la pièce et sans usinage intérieur subséquent, ces opérations d'extrusion comprenant :
- l'extrusion, sur une partie de sa longueur, d'une ébauche tubulaire (1a) par l'orifice rétréci (14) d'une matrice (8), la pointe (10) d'un poinçon (7) à épaulement unique (13) s'engageant dans un passage axial (11) de ladite ébauche tandis que celle-ci est poussée par ledit épaulement (figure 5) ;
- la poussée de l'ébauche ainsi déformée (1b) par une pièce intercalaire (12) interposée entre ledit épaulement unique (13) et l'ébauche, la pointe (10) du poinçon (7) étant ainsi partiellement extraite du passage (11) de ladite ébauche (1b) (figure 6) ;
- ce qui produit un renflement interne (2, 2') à profil pratiquement sinusoïdal dans la partie de l'ébauche (1b) située en avant de ladite pointe (10) du poinçon, tandis que cette ébauche est complètement extraite de la matrice (figure 7).

2. Procédé selon la revendication 1, caractérisé en ce que ladite pointe (10) du poinçon (7) est terminée par une extrémité conique.

3. Procédé selon la revendication 1 ou 2, caractérisé en ce que ladite pièce intercalaire (12) est constituée par l'ébauche suivante.

4. Procédé selon l'une quelconque des revendications 1 à 3, caractérisé en ce que la fixation mutuelle des deux dits tronçons (1, 1') est réalisée par soudage, notamment par soudage par frottement.

5. Axe creux, destiné en particulier à assurer la liaison entre un pied de bielle et un piston de moteur à combustion interne, cet axe étant profilé intérieurement de sorte à présenter au moins deux renflements de révolution (2, 2') à profil pratiquement sinusoïdal, au niveau de la ou des zones susceptibles d'être soumises aux efforts les plus importants, à savoir au niveau de ses plans de cisaillement respectifs, caractérisé en ce qu'il est constitué par un procédé conforme à l'une quelconque des revendications précédentes.

6. Axe selon la revendication 5, caractérisé en ce que le renflement interne des tronçons est à peu près central dans chaque tronçon.

## Patentansprüche

1. Verfahren zur Herstellung eines Hohlbolzens mit inneren umlaufenden Ausbuchtungen, das aus dem anfänglichen Herstellen von Teilstücken des Hohlbolzens, von denen jedes mindestens eine innere umlaufende Ausbuchtung mit praktisch sinusförmigem Profil aufweist, danach dem Zusammensetzen der beiden Teilstücken koaxial Kopf an Kopf besteht, um einen Hohlbolzen zu erhalten, der innen mindestens zwei umlaufende Ausbuchtungen aufweist, dadurch gekennzeichnet, daß die Teilstücke gebildet werden durch die Vorgänge des Kaltextrudierens mit Hilfe eines einzelnen Stempels (7) ohne Wiedervornahme des Stückes und ohne nachfolgende innere maschinelle Bearbeitung, wobei die Vorgänge des Extrudierens aufweisen:
- das Extrudieren eines rohrförmigen Rohteils (1a) über einen Teil seiner Länge durch eine verengte Düse (14) einer Matrize (8), wobei die Spitze (10) eines Stempels (7) mit einer einzelnen Schulter (13) in Eingriff kommt mit einem axialen Durchgang (11) dieses Rohteils und zwar so, daß dieses durch die Schulter gedrückt wird (Fig. 5);
- das Drücken des auf diese Weise verformten Rohteils (1b) durch ein dazwischen gelegtes Stück (12), das zwischen diese einzelne Schulter (13) und das Rohteil eingefügt wird, wobei die Spitze (10) des Stempels (7) somit teilweise aus dem Durchgang (11) des Rohteils (1b) herausgezogen wird (Fig. 6);
- was eine innere Ausbuchtung (2, 2') mit praktisch sinusförmigen Profil in dem Teil des Rohteils (1b) erzeugt, das vor dieser Spitze (10) des Stempels gelegen ist, so daß dieses Rohteil vollständig aus der Matrize herausgezogen wird (Fig. 7).

2. Verfahren nach Anspruch 1, dadurch gekennzeichnet, daß die Spitze (10) des Stempels (7) durch ein konusförmiges Ende abgeschlossen ist.

3. Verfahren nach Anspruch 1 oder 2, dadurch gekennzeichnet, daß dieses Zwischenstück (12) gebildet wird durch das nachfolgende Rohteil.

4. Verfahren nach irgendeinem der Ansprüche 1 bis 3, dadurch gekennzeichnet, daß die gegenseitige Befestigung der beiden Teilstücke (1, 1') gebildet wird durch Schweißen, insbesondere durch Reibungsschweißung.

5. Hohlbolzen, der insbesondere dazu bestimmt ist, die Verbindung zwischen einem Fuß einer Pleuelstange und einem Kolben eines Verbrennungsmotors sicherzustellen, wobei der Bolzen innen so profiliert ist, daß er mindestens zwei umlaufende Ausbuchtungen (2, 2') mit praktisch sinusförmigem Profil aufweist in der Lage der Zone oder der Zonen, die dazu geeignet sind, den größten Belastungen unterworfen zu werden, nämlich der Lage der jeweiligen Scherebenen, dadurch gekennzeichnet, daß er durch ein Verfahren nach irgendeinem der vorangehenden Ansprüche gebildet ist.

6. Bolzen nach Anspruch 5, dadurch gekennzeichnet, daß die innere Ausbuchtung der Teilstücke ungefähr in der Mitte in jedem Teilstück ist.

## Claims

1. A method of manufacturing a hollow shaft with internal swellings of revolution, which comprises forming first hollow shaft sections each having at least one internal swelling of revolution having a generally sinusoidal profile, then assembling two sections coaxially end to end so as to obtain a hollow shaft having at least two internal swellings of revolution, characterized in that said sections are formed by cold extruding operations using a single punch (7) without removal of said part and without subsequent internal machining, said extruding operations comprising :
extruding, over a part of its length, a tubular blank (1a) through a narrowed orifice (14) of a die (8) with a tip (10) of a punch (7) having a single shoulder (13) engaging an axial passage (11) of said blank while said blank is simultaneously pushed by said shoulder (fig. 5) ;
pushing the thus deformed blank (1b) by means of an insert piece (12) interposed between said single shoulder (13) and said blank with the tip (10) of the punch (7) being thus partially removed from the passage (11) of said blank (1b) (fig. 6) ;
thus producing an internal swelling (2, 2') having a generally sinusoidal profile, in a portion (1b) of said blank situated in front of said tip (10) of the punch, while this blank is completely extracted from the die (fig. 7).

2. The method according to claim 1, characterized in that said tip (10) of punch (7) is terminated by a conical end.

3. The method according to claim 1 or 2, characterized in that said insert piece (12) is formed by a further blank.

4. The method according to claim 1, characterized in that said sections (1, 1') are mutually fixed together by welding, namely by friction welding.

5. Hollow shaft, intended in particular to provide the connection between the small end of a connecting rod and a piston of an internal combustion engine, this shaft being profiled inwardly so as to have at least two swellings of revolution (2, 2') having a generally sinusoidal profile, at the level of the zone or zones likely to be subjected to the highest forces, namely at the level of its respective shearing planes, characterized in that it is formed by a method according to any one of the preceding claims.

6. Shaft according to claim 5, characterized in that the internal swelling of the sections is substantially central in each section.
